# EUROPEAN PATENT SPECIFICATION

(11) **EP 0 693 637 B1**
(45) Date of publication and mention of the grant of the patent: **09.09.1998**
(21) Application number: 95305003.6
(22) Date of filing: 17.07.1995
(51) Int. Cl.: F16G 11/14, A43C 7/00

(54) **Apparatus for adjusting the length and/or the tension of an elastic cord**
Vorrichtung zur Verstellung der Länge und/oder der Spannung eines elastischen Seils
Dispositif de réglage de la longueur et/ou de la tension d'une corde élastique

(30) Priority: 18.07.1994 US 276791
(43) Date of publication of application: 24.01.1996
(73) Proprietor: D P DESIGN, INC., Williston, Vermont 05495 (US)
(72) Inventor: Perry, David L., Essex Junction, Vermont (US); Weaver, Thomas S., Essex Junction, Vermont (US)
(74) Representative: Adams, William Gordon

(56) References cited:
- FR-E- 64 553
- US-A- 3 698 042
- US-A- 4 592 116

## Description

This invention pertains to elastic cords, and concerns apparatus for adjusting the length and/or the tension of such elastic cords. The apparatus is designed to be attached to an elastic cord and in one application allows a user to position and maintain the tieing down of an item with a single length cord instead of having a number of cords of different lengths for each application.

It is very common to have elastic type cords for strapping items on the top of cars or in the back of trucks in both commercial and household situations. Examples of these situations include moving furniture in a pick-up truck. It has been the practice to use elastic cords of various lengths with hooks on each end to strap down the item that is to be carried, positioned and maintained in position. The user has to have a number of these cords of different lengths to accomplish different jobs.

It is an object of the invention to provide an apparatus for adjusting the length and/or the tension of an elastic cord which is simple and effective and can be manufactured with or attached to a standard elastic cord.

It is another object of this invention to provide an apparatus that provides a safe tool that can be used in multiple situations and is of little or no hazard to the operators of the equipment.

An elastic cord tensioning and/or length adjusting apparatus according to an embodiment of the invention is designed to allow the user to have cords of a single length and to adjust the length and/or tension as necessary for the particular application. An elastic cord tensioning and/or length adjusting apparatus can be used with such items as shoe laces to maintain tension.

According to the invention there is provided apparatus for adjusting the length and/or tension of an elastic cord, comprising:
a support platform;
said support platform having a plurality of apertures;
said apertures in said support platform comprising means for receiving said elastic cord;
said support platform further having a centerline projection tube located thereon;
a locking mechanism;
said mechanism comprising a base;
said base comprising cut-outs at each end of said base;
said cut-outs in said base of said locking mechanism comprises means for receiving said elastic cord;
said base further comprising a tubular extension for positioning said tubular extension within said centerline projection tube of said support platform; and
means for retaining said locking mechanism in position relative to said support platform.

One embodiment of the invention will now be described by way of example with reference to the accompanying drawing, in which:-
Figure 1 is a side elevational view of an embodiment of an elastic cord tensioning and/or length adjusting apparatus according to the invention; and
Figure 2 is an enlarged exploded view thereof.

As shown in the figures, the novel elastic cord length and/or tension adjusting apparatus 10 comprises a horizontal (in the drawing) support platform 11 that contains two apertures 12 and 12a that are designed to receive the opposite ends of an elastic cord 1 as shown. The support platform 11 also has an open centerline tubular projection 13. The second part of the apparatus 10 is a locking mechanism 14 comprising a smaller horizontal (in the drawing) base 15 that has two cut-out areas 16 and 16a at each end 20 and 20a of the base 15. These cut-out areas 16 and 16a are also designed to receive the opposite ends of the elastic cord 1 as shown. The locking mechanism 14 has a tubular extension 17 that projects upwardly from the base 15 and is inserted into the centerline tubular projection 13 in the support platform 11. A pressure spring 18 may be added to the mechanism in order to provide a pressure to be overcome in operating the apparatus 10. The spring 18 is a sliding fit in the projection 13 and abuts the extension 17. A retainer plug 19 has a portion of reduced diameter which passes through the spring 18 and is a friction fit in the extension 17 to ensure that the locking mechanism 14 is retained in position, in use, with the base 15 maintained substantially parallel to the platform 11. The spring 18, if provided, allows some limited movement between the platform 11 and base 15.

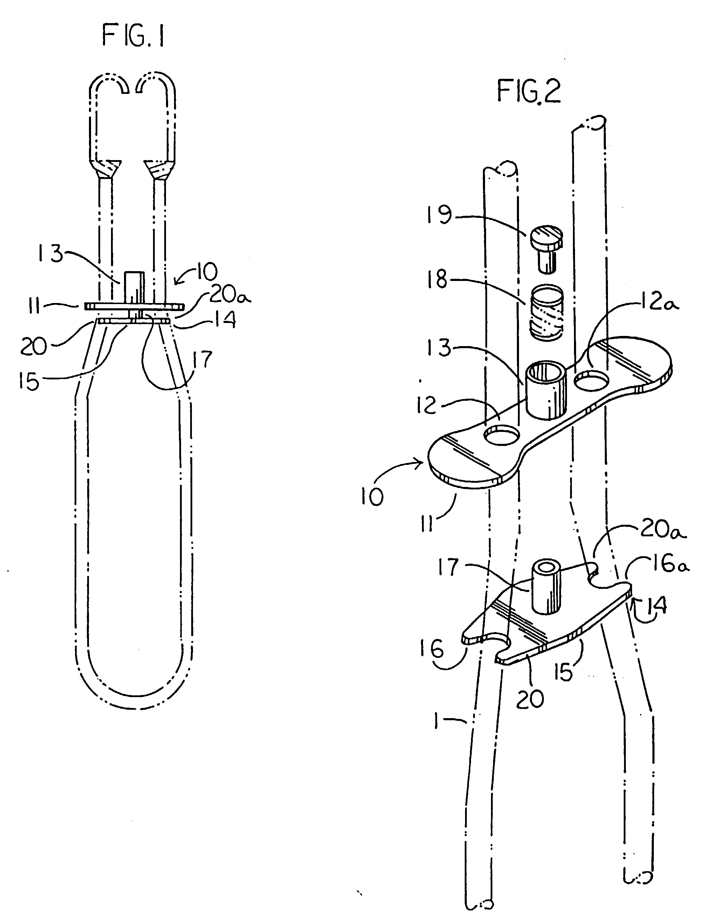

The elastic cord is placed through the apparatus and a loop is established in the cord as shown in the figure 1. Upon stretching the elastic cord, the diameter of the cord decreases which allows the base 15 of the locking mechanism to be moved toward the support platform. This movement forms an opening smaller than the diameter of the elastic cord when the cord is in its relaxed state. The hole diameter is created by the apertures in the horizontal support platform and the cut-outs in the horizontal base aligning. The locking is created as the upper platform and the lower base get close together when the cord is pulled and stretched. This action causes the cord to fit within a progressively narrower aperture created by the aperture in the upper platform and the cut-outs in the lower unit, e.g. the cut-outs are of size that they reduce the effective diameter of the apertures 12, 12a as the base 15 gets closer to the platform 11. When the cord is released, its diameter increases and the cord is locked in position, until the operator stretches the cord again. Releasing the cord is accomplished by manually moving the locking mechanism away from the horizontal support platform which allows the tension to be safely released without detaching the hooked ends of the elastic cord. The spring assists the user in the movement of the locking mechanism but is not required for operation.

The apparatus would also be very useful with items like shoe laces to maintain tension and to adjust the length of the lace.

While we have described our invention in connection with specific embodiments thereof, it is clearly to be understood that this is done only by way of example and not as a limitation to the scope of our invention as set forth in the objects thereof and in the appended claims.

## Claims

1. Apparatus for adjusting the length and/or tension of an elastic cord, comprising:
a support platform (11);
said support platform having a plurality of apertures (12, 12a);
said apertures in said support platform comprising means for receiving said elastic cord;
said support platform further having a centerline projection tube (13) located thereon;
a locking mechanism (14);
said mechanism comprising a base (15);
said base comprising cut-outs (16, 16a) at each end of said base;
said cut-outs in said base of said locking mechanism comprises means for receiving said elastic cord;
said base further comprising a tubular extension (17) for positioning said tubular extension within said centerline projection tube of said support platform; and
means for retaining (19) said locking mechanism in position relative to said support platform.

2. Apparatus according to claim 1, wherein said retaining means is arranged to maintain said base in spaced, parallel relation with said support platform.

3. Apparatus according to claim 2, wherein said retaining means comprises resilient means (18) for facilitating some variation in the spaced, parallel relationship between said base and said platform.

4. Apparatus, according to claim 1, wherein:
said retaining means for said locking mechanism comprises a pressure providing means (18) abutting said tubular extension;
said retaining means for said locking mechanism further comprising a plug unit (19) to be inserted into the end of said tubular extension of said locking mechanism in order to hold said locking mechanism in position.

5. Apparatus according to claim 4, wherein said pressure providing means is a spring.

6. Apparatus according to any one of the preceding claims, wherein said apertures and corresponding cut-outs being so dimensioned and positioned that the effective openings for the elastic cord are progressively reduced as the dimension between the base member and support member is reduced thereby to lock around the elastic cord to prevent relative movement between the cord and the apparatus.

## Patentansprüche

1. Vorrichtung zur Verstellung der Länge und/oder Spannung eines Elastikseils,
mit einem mit mehreren Öffnungen (12; 12a) zur Aufnahme dieses Elastikscils versehenen Haltesteg (11), welcher außerdem eine mittig aus demselben vorstehende Röhre (13) aufweist,
und mit einem Fixierungsmechanismus (14) in Form eines Stegunterteils (15) welches an seinen beiden Enden mit Aussparungen (16, 16a) zur Aufnahme des Elastikseils versehen ist, wobei dieses Stegunterteil außerdem sowohl eine röhrenförmige Verlängerung (17) aufweist, die der Positionierung in der aus dem Haltesteg mittig vorstehenden Röhre dient, als auch eine Haltevorrichtung (19), um den Fixierungsmechanismus in einer bestimmten Lage zum Haltesteg zu halten.

2. Vorrichtung nach Anspruch 1, in der die Haltevorrichtung so angeordnet ist, daß das Stegunterteil mit einem Abstand parallel zum Haltesteg gehalten wird.

3. Vorrichtung nach Anspruch 2, in der die Haltevorrichtung aus einer elastischen Vorrichtung (18) zur Erleichterung einer gewissen Verstellung des parallelen Abstands zwischen dem Stegunterteil und dem Haltesteg besteht.

4. Vorrichtung nach Anspruch 1, in der die Haltevorrichtung für den Fixierungsmechanismus aus einer an die röhrenförmige Verlängerung anliegenden Druckausübungsvorrichtung (18) besteht, sowie aus einer Stöpseleinheit (19), welche in das Ende der röhrenförmigen Verlängerung des Fixierungsmechanismusses eingestöpselt wird und denselben auf diese Weise in seiner Lage halt.

5. Vorrichtung nach Anspruch 4, wobei es sich bei der genannten Druckausübungsvorrichtung um eine Feder handelt.

6. Vorrichtung nach einem der vorhergehenden Ansprüche, wobei die Öffnungen und die diesen Öffnungen entsprechenden Aussparungen so dimensioniert und positioniert sind, daß die von den Öffnungen und den Aussparungen gebildeten Aufnahmeöffnungen für das Elastikseil in dem Maße zunehmend enger werden, wie sich der Abstand zwischen dem Stegunterteil und dem Haltesteg verringert, und die Aufnahmeöffnungen dabei das Elastikseil derart fest umschließen, daß sich das Seil gegenüber der Vorrichtung nicht mehr bewegen kann.

## Revendications

1. Dispositif servant à régler la longueur et/ou la tension d'un cordon élastique, comprenant:
une plate-forme de soutien (11);
ladite plate-forme de soutien étant dotée d'une pluralité d'orifices (12, 12a);
lesdits orifices dans ladite plate-forme de soutien comprenant des moyens de réception dudit cordon élastique;
ladite plate-forme de soutien étant de plus dotée d'un tube de projection central (13) se trouvant dessus;
un mécanisme de verrouillage (14);
ledit mécanisme de verrouillage comprenant une base (15);
ladite base comprenant des découpages (16, 16a) à chaque extrémité de ladite base;
lesdits découpages dans ladite base dudit mécanisme de verrouillage comprenant des moyens de réception dudit cordon élastique;
ladite base comprenant de plus une rallonge tubulaire (17) servant à positionner ladite rallonge tubulaire à l'intérieur dudit tube de projection central de ladite plate-forme de soutien; et
des moyens pour retenir (19) ledit mécanisme de verrouillage en position relative à ladite plate-forme de soutien.

2. Dispositif conformément à la demande 1, qui stipule que les moyens de retenue soient installés de façon à maintenir ladite base en relation espacée et parallèle avec ladite plate-forme de soutien.

3. Dispositif conformément à la demande 2, qui stipule que les moyens de retenue doivent comprendre des moyens élastiques (18) pour faciliter une certaine variation dans dans la relation espacée et parallèle entre ladite base et ladite plate-forme.

4. Dispositif, conformément à la demande 1, qui stipule que:
lesdits moyens de retenue dudit mécanisme de verrouillage doivent comprendre des moyens de pression (18) sur ladite rallonge tubulaire;
lesdits moyens de retenue dudit mécanisme de verrouillage doivent comprendre de plus un bouchon (19) qui est inséré dans l'extrémité dudit mécanisme de verrouillage afin de retenir ledit mécanisme de verrouillage en place.

5. Dispositif conformément à la demande 4, qui stipule que lesdits moyens de pression sont un ressort.

6. Dispositif conformément à l'une des demandes qui précèdent, qui stipulent que les orifices et les découpages correspondants soient dimensionnés et positionnés de façon à ce que les ouvertures destinées au cordon élastique soient graduellement réduites au fur et à mesure que le dimension entre le membre de base et le membre de soutien est réduite afin de serrer le cordon élastique pour empêcher le mouvement relatif entre le cordon et le dispositif.
